# DEMANDE DE BREVET EUROPEEN

(11) **EP 1 557 787 A1**
(43) Date de publication de la demande: **27.07.2005**
(21) Numéro de dépôt: 05290132.9
(22) Date de dépôt: 21.01.2005
(51) Int. Cl.: G06K 17/00, G06K 7/00

(54) **Dispositif de lecture interrogeant périodiquement des transpondeurs RFID**

(30) Priorité: 23.01.2004 FR 0400642
(71) Demandeur: NEOPOST INDUSTRIE, F-92220 Bagneux (FR)
(72) Inventeur: Lievre, Jérome, 78670 Villennes sur Seine (FR); Peralle, Fidel, 78220 Viroflay (FR); Glaeser, Axel, 2575 Tauffelen (CH)
(74) Mandataire: Joly, Jean-Jacques

(57) **Abrégé**

Dispositif de lecture/interrogation RFID comportant des moyens mémoire (38) pour stocker des données sur l'état de conservation d'un produit, des moyens d'émission/réception (32, 34, 36) reliés aux moyens mémoire par l'intermédiaire de moyens de traitement (38) pour lire ces données au niveau d'un indicateur RFID (10A, 10B, 10C) délivrant ces données sur l'état de conservation d'un produit, dont au moins des données de température, des moyens d'alimentation en énergie (48), des moyens d'horloge (50) pour délivrer périodiquement aux moyens de traitement un signal d'horloge, ces moyens de traitement assurant une interrogation périodique de l'indicateur RFID et un stockage des données d'état dans les moyens mémoire au rythme du signal d'horloge délivré par les moyens d'horloge de façon à permettre une détermination en temps réel de l'état de conservation du produit muni de cet indicateur RFID, et des moyens d'affichage (40) pour visualiser des informations sur le produit et son état de conservation.
Conteneur muni d'un tel dispositif.

## Description

### Domaine de la technique

La présente invention se rapporte au domaine de l'industrie alimentaire, chimique ou pharmaceutique et elle concerne plus particulièrement un dispositif de lecture/interrogation RFID et un conteneur associé à ce dispositif capable de détecter et de renseigner en permanence sur l'état de fraîcheur et de conservation d'une denrée alimentaire périssable, d'un médicament ou encore d'une substance chimique susceptible de contamination, placé dans ce conteneur.

### Art antérieur

Aujourd'hui, les produits alimentaires sont soumis à des contrôles de qualité de plus en plus contraignants tant lors de leur élaboration que durant leur transport et leur stockage. C'est la raison d'être des indicateurs chimiques tels que les pastilles « fraîcheur » que l'on rencontre sur un grand nombre de produits alimentaires périssables et qui permettent un contrôle visuel simple d'une qualité nutritionnelle inacceptable ou d'une date de consommation expirée. Le brevet US 5,317,987 est un exemple parfait d'un tel indicateur. Ces indicateurs visuels ne renseignent toutefois que sur un état déterminé du produit et non sur une évolution de cet état du cours du temps.

Or, depuis les travaux de Svante August Arrhenius en 1889, on sait que la température joue un grand rôle dans la détérioration de la qualité des produits alimentaires et, plus particulièrement, que la variation de cette température au cours de la durée de vie du produit est essentielle pour déterminer son état de conservation. Cette constatation est à la base de la recherche et du développement d'indicateurs électrochimiques tels que ceux décrits dans le brevet US 6,294,997 qui font appel à la technologie connue sous le sigle RFID et améliorée par l'adjonction d'un module de temporisation. Avec un tel indicateur RFID (RFID tag), il devient possible d'avoir une connaissance plus précise de l'évolution de cette température sur une période de temps définie par le module de temporisation.

Toutefois, cette période de temps déterminée est limitée en fonction de conditions de déclenchement et d'arrêt du module de temporisation préétablies et n'est donc pas suffisante pour obtenir une évaluation complète des états du produit tout au long de sa vie et il existe donc encore aujourd'hui un besoin pour un dispositif capable de détecter et de renseigner en permanence sur l'état de fraîcheur et de conservation d'une denrée alimentaire périssable, d'un médicament ou de toute autre substance chimique susceptible de contamination.

### Objet et définition de l'invention

La présente invention a donc pour objet de répondre au besoin précité en proposant un dispositif basé sur la technologie RFID qui garantisse avec une plus grande certitude la qualité nutritionnelle d'un produit. Un but de l'invention est aussi de garantir un suivi et un contrôle du produit à tout moment entre sa fabrication et sa commercialisation.

Ces buts sont atteints par un dispositif de lecture/interrogation RFID comportant : des moyens mémoire pour stocker des données sur l'état de conservation d'un produit, des moyens d'émission/réception reliés aux moyens mémoire par l'intermédiaire de moyens de traitement pour lire ces données au niveau d'un indicateur RFID délivrant ces données sur l'état de conservation d'un produit, dont au moins des données de température, des moyens d'alimentation en énergie, et des moyens d'horloge pour délivrer périodiquement aux moyens de traitement un signal d'horloge, lesdits moyens de traitement assurant une interrogation périodique dudit indicateur RFID et un stockage desdites données d'état dans lesdits moyens mémoire au rythme du signal d'horloge délivré par lesdits moyens d'horloge de façon à permettre une détermination en temps réel de l'état de conservation du produit muni de cet indicateur RFID, et des moyens d'affichage pour visualiser des informations sur ledit produit et ledit état de conservation dudit produit.

Ainsi, par cette interrogation périodique (en temps réel) de données relatives à l'état de conservation des produits on obtient la certitude d'acquérir un produit dont la qualité de fraîcheur est garantie et peut être contrôlé par affichage direct.

De préférence, le dispositif de lecture/interrogation RFID comporte en outre une interface de communication pour transférer les données issues de différents indicateurs RFID vers un organe d'administration commun au travers d'un réseau de communication.

Avantageusement, lesdites données d'état comportent en outre une ou plusieurs des données suivantes : données d'humidité, données d'acidité, données de pression, données biologiques.

Les moyens mémoire peuvent comporter en outre des données prises parmi au moins : une référence du produit, un prix du produit, une date de fabrication du produit, une date limite de vente du produit.

Selon l'application envisagée, ce produit est une denrée alimentaire périssable, un médicament, une substance chimique susceptible de contamination.

La présente invention concerne également un conteneur muni du dispositif de lecture/interrogation précité.

### Brève description des dessins

L'invention sera mieux comprise au vu de la description détaillée qui suit accompagnée par des exemples illustratifs et non limitatifs en regard des figures suivantes sur lesquelles :
- la figure 1 illustre la structure interne d'un indicateur RFID mis en oeuvre dans l'invention,
- la figure 2 est un exemple d'un dispositif de lecture/interrogation selon l'invention adapté aux indicateurs RFID du type de la figure 1, et
- la figure 3 montre un exemple d'application du dispositif de la figure 2 à un magasin de stockage de produits alimentaires.

### Description détaillée de modes de réalisation

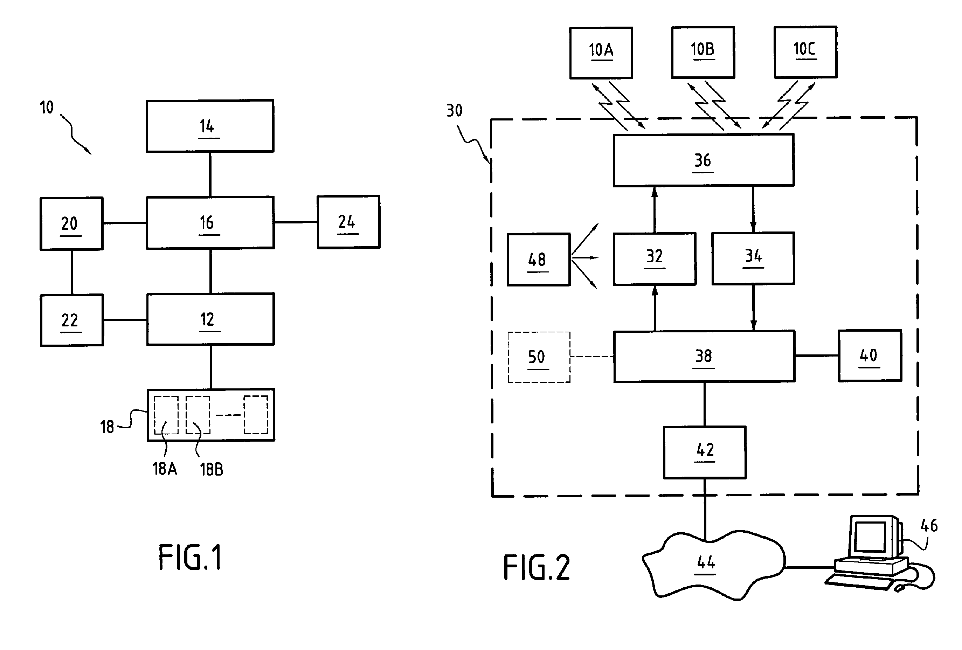

Un indicateur RFID 10 pour la détermination de l'état de conservation d'un produit destiné à coopérer avec un dispositif de lecture/interrogation conforme à la présente invention est illustré à la figure 1. Il comporte classiquement comme tout indicateur RFID (Radio Frequency Identification Device): des moyens mémoire 12 pour stocker des données, des moyens d'émission/réception 14 reliés aux moyens mémoire par l'intermédiaire de moyens de traitement 16 pour transmettre ces données à un lecteur/interrogateur externe 30 (voir la figure 2). Ces moyens mémoire sont de type RAM, ROM, Flash ou similaire et permettent de stocker tant des données que des éléments de programme permettant le fonctionnement adéquat des moyens de traitement. Ces moyens de traitement sont avantageusement de type à microprocesseur, logique programmable ou microcontrôleur. Les moyens d'émission/réception intègrent comme il est connu une antenne et des moyens de modulation/démodulation pour transformer les signaux reçus par l'antenne en données exploitables par les moyens de traitement et inversement.

Pour permettre une utilisation de cet indicateur RFID pour la détermination de l'état de conservation d'un produit tel qu'une denrée alimentaire, un médicament ou une substance chimique susceptible d'être contaminée, il est prévu que celui-ci intègre des moyens de détection 18 pour relever des données sur l'état de conservation du produit. Ces données consistent au moins en des données de température (paramètre essentiel dans la détermination de l'état de conservation des produits selon Arrhenius) mais peuvent avantageusement intégrer également des données relatives à l'humidité du produit, à son acidité, à sa pression, ou bien encore, sans être limitatif, à sa nature et sa composition biologiques. Des capteurs conventionnels (de température 18A, d'humidité 18B, etc.) reliés aux moyens de traitement permettent de relever simplement ces données selon une périodicité prédéterminée en fonction d'un signal d'horloge. Selon la nature de l'indicateur RFID, celui-ci peut comporter (indicateur semi-passif) ou non (indicateur passif) des moyens d'alimentation en énergie 22 pour alimenter les moyens de traitement et permettre une sauvegarde des données stockées dans les moyens mémoire.

Lorsque l'indicateur RFID est du type semi-passif, il peut comporter en outre des moyens d'horloge 20 pour délivrer périodiquement aux moyens de traitement un signal d'horloge à partir duquel sera déterminée la périodicité des relevés de données. Ainsi, les moyens de traitement pourront assurer dans les moyens mémoire, au rythme de ce signal d'horloge, un stockage périodique, en temps réel, des données relatives à l'état de conservation des produits. A partir de ces données et en fonction des éléments de programme auxquels ils ont accès, ces moyens de traitement pourront aussi actionner une alarme 24 visuelle (écran LCD par exemple) ou sonore (buzzer par exemple) indicatrice d'une qualité nutritionnelle inacceptable (produit avarié par exemple). Par qualité nutritionnelle inacceptable, il faut entendre par exemple le franchissement d'un seuil de température pendant une durée supérieure à un lapse de temps prédéfini ou encore un taux d'humidité supérieur à une valeur prédéterminée (ces seuil et valeur étant bien entendu préalablement emmagasinés dans les moyens mémoire).

Au contraire, préférentiellement lorsque l'indicateur RFID est du type passif, le signal d'horloge à partir duquel sera déterminée la périodicité des relevés de données est élaboré dans le dispositif de lecture/interrogation coopérant avec cet indicateur.

La figure 2 est un bloc diagramme d'un tel lecteur/interrogateur 30 selon l'invention destiné à coopérer avec un ou plus généralement plusieurs indicateurs RFID 10A, 10B, 10C avantageusement de type passif tels que décrits précédemment. Ces éléments communiquent par couplage inductif comme il est connu. Le lecteur/interrogateur comporte un émetteur 32, un récepteur 34 reliés tous les deux à une antenne 36, un circuit de commande et de traitement de données 38 intégrant des moyens mémoire et un afficheur 40. L'émetteur 32 génère un signal de puissance et un signal d'interrogation pour l'antenne qui émet un champ électromagnétique en direction des différents indicateurs RFID qui entrent dans sa zone de couverture. Un protocole anti-collision de type connu est bien entendu nécessaire pour éviter des interrogations ou des réponses simultanées. Le récepteur 34 détecte alors un changement dans le champ électromagnétique dû à la transmission de données de la part d'un indicateur RFID alimenté au travers du signal de puissance et transmet les données recueillies aux moyens de traitement 38 qui affichent à la demande ces données sur les moyens d'affichage 40. Ces données sont les données d'état variables précitées issus des moyens de détection mais aussi des données préenregistrées lors de l'élaboration du produit comme par exemple : une référence du produit, un prix du produit, une date de fabrication du produit, une date limite de vente du produit, etc.

Lorsque l'indicateur RFID est du type passif, c'est le dispositif de lecture/interrogation qui comporte les moyens d'horloge (référencés 50). Il est alors possible d'effectuer sans interruption avec une périodicité courte (par exemple toutes les minutes de 0 heure à 24 heures) une interrogation des indicateurs RFID. En effet, dans cette configuration, il n'est plus nécessaire de stocker les données en provenance des moyens de détection entre deux interrogations et donc de gérer au niveau de l'indicateur RFID l'historique de ces données. A chaque interrogation du lecteur/interrogateur correspondra donc une lecture immédiate des moyens de détection et un envoi simultané des données recueillies vers l'interrogateur. En outre, cette interrogation sera précédée d'une alimentation en énergie suffisante pour effectuer cette lecture. Entre deux détections, l'indicateur RFID passif ne pourra par contre effectuer aucune lecture de ses moyens de détection.

Le lecteur/interrogateur est avantageusement muni d'une interface de communication 42 pour transférer, via un réseau de communication 44, les données relevées vers un organe d'administration déporté 46, ordinateur de gestion par exemple. Dans le cas d'un lecteur/interrogateur portatif, cette interface de communication est de préférence de type sans fil infrarouge ou radio courte portée (bluethooth ou wifi). Elle peut être filaire dans le cas d'un dispositif interrogateur fixe. Bien entendu, des moyens d'alimentation en énergie 48 sont en outre prévus pour permettre l'émission électromagnétique et alimenter notamment les moyens de traitement. Ils sont avantageusement de type pile ou batterie rechargeable lorsque le dispositif est portable et de type convertisseur AC/DC lorsque le dispositif est fixe.

L'utilisation de l'ensemble indicateur-interrogateur selon l'invention se révèle donc très simple. Il suffit en effet de fixer sur le produit à contrôler un indicateur RFID délivrant des données sur l'état de conservation du produit, dont au moins des données de température, puis d'interroger, selon une périodicité prédéterminée en fonction d'un signal d'horloge, au moyen d'un lecteur/interrogateur cet indicateur RFID pour récupérer lesdites données d'état, et de déterminer ensuite l'état de conservation du produit en fonction des données d'état récupérées. Le signal d'horloge peut être délivré par l'indicateur RFID (cas d'un indicateur semi-passif) mais est de préférence délivré par le lecteur/interrogateur (cas d'un indicateur passif). Cette interrogation de l'indicateur RFID est effectuée ou non avec une même périodicité fixe prédéterminée. Ces données concernant l'état de conservation du produit comme d'autres données relatives au produit lui-même pourront en outre être affichées sur les moyens d'affichage 40 et donc accessibles directement au niveau du dispositif de lecture/interrogation qui pourra par exemple afficher une valeur indicatrice d'une qualité nutritionnelle inacceptable. Avantageusement, ces données seront retransmises au travers d'un réseau de communication vers un organe d'administration commun qui pourra centraliser les données issues de différents indicateurs dans un but de gestion.

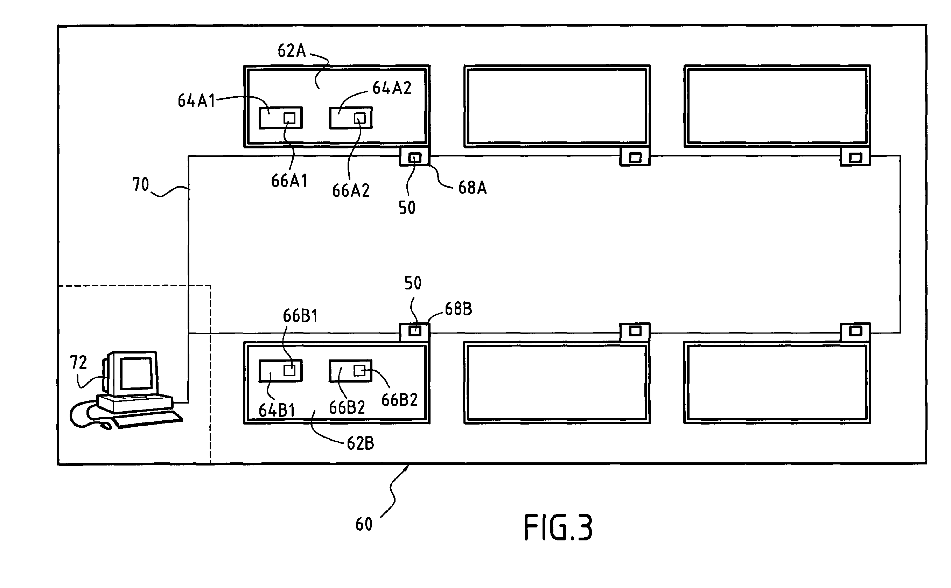

Un exemple d'application préférentielle de cette configuration simplifiée est illustré à la figure 3 qui montre un hall ou magasin de stockage 60 comportant une pluralité de congélateurs (typiquement plusieurs dizaines 62A, 62B, etc.) contenant chacun une pluralité de produits alimentaires congelés (typiquement plusieurs dizaines 64A1, 64A2, 64B1, 64B2, etc.). Chacun de ces produits est muni d'un indicateur RFID passif 66A1, 66A2, 66B1, 66B2, etc., c'est à dire sans moyens d'alimentation en énergie ni moyens d'horloge. Chaque congélateur est muni d'un lecteur/interrogateur 68A, 68B intégrant des moyens d'horloge 48 pour une interrogation périodique et automatique des indicateurs RFID des produits qu'il renferme et un afficheur 40. Chaque lecteur est de plus relié via un réseau de communication du magasin 70 à un ordinateur de gestion 72 disposé dans un local du responsable du magasin qui peut ainsi suivre en temps réel (avec la périodicité qu'il s'est fixé) l'état de conservation des tous ses produits. Ce suivi s'effectue au niveau de son ordinateur de gestion sans qu'il soit nécessaire qu'il intervienne directement au niveau d'un congélateur. Cette intervention ne s'avère en effet indispensable que lorsqu'il lui est signalé un produit avarié, c'est à dire un produit dont l'interrogation a fait apparaître qu'il avait dépassé une date limite de vente, ou enfreint certains seuils déterminés préalablement.

Avec ce type de gestion, le client du magasin obtient la certitude d'acquérir un produit frais dont la qualité nutritionnelle (fraîcheur) est garantie, le lecteur/enregistreur du congélateur, avec son écran d'affichage, lui permettant en effet de contrôler personnellement toutes les informations concernant le produit qu'il aura sélectionné et son état de conservation (sa qualité), de façon claire et précise : nature et composition, dates de fabrication et de stockage, historique des températures, qualité biologique, date limite de vente, etc.

On notera que cette configuration peut être étendue sous certaines conditions à toute la chaîne du froid de la fabrication du produit à sa commercialisation. Il suffit pour cela que les produits congelés soient constamment surveillés, pendant leur stockage ou leur transport. Par exemple, on peut envisager que ces produits munis chacun d'un indicateur RFID passif, de leur fabrication à leur commercialisation, soient toujours transportés ou stockés dans des conteneurs réfrigérés munis chacun d'un lecteur/interrogateur selon l'invention. Le brevet US 4,831,837 décrit un système de transport permettant ce stockage réfrigéré tout au long de la chaîne du froid auquel l'invention peut alors tout à fait être appliquée.

On notera également qu'une telle configuration de stockage peut concerner des produits autres que des produits alimentaires périssables et on peut tout à fait envisager des conteneurs réfrigérés ou non remplis de médicaments ou des conteneurs dans lesquels seraient disposées des substances dont la connaissance en temps réel de l'état de conservation est nécessaires, par exemple des substances chimiques susceptibles de contamination.

## Revendications

1. Dispositif de lecture/interrogation RFID comportant : des moyens mémoire (38) pour stocker des données sur l'état de conservation d'un produit, des moyens d'émission/réception (32, 34, 36) reliés aux moyens mémoire par l'intermédiaire de moyens de traitement (38) pour lire ces données au niveau d'un indicateur RFID (10) délivrant ces données sur l'état de conservation d'un produit, dont au moins des données de température, des moyens d'alimentation en énergie (48), des moyens d'horloge (50) pour délivrer périodiquement aux moyens de traitement un signal d'horloge, lesdits moyens de traitement assurant une interrogation périodique dudit indicateur RFID et un stockage desdites données d'état dans lesdits moyens mémoire au rythme du signal d'horloge délivré par lesdits moyens d'horloge de façon à permettre une détermination en temps réel de l'état de conservation du produit muni de cet indicateur RFID, et des moyens d'affichage (40) pour visualiser des informations sur ledit produit et ledit état de conservation dudit produit.

2. Dispositif de lecture/interrogation RFID selon la revendication 1, **caractérisé en ce que** lesdites données d'état comportent en outre une ou plusieurs des données suivantes : données d'humidité, données d'acidité, données de pression, données biologiques.

3. Dispositif de lecture/interrogation RFID selon la revendication 1, **caractérisé en ce que** lesdits moyens mémoire comportent en outre des données prises parmi au moins : une référence du produit, un prix du produit, une date de fabrication du produit, une date limite de vente du produit.

4. Dispositif de lecture/interrogation RFID selon l'une quelconque des revendications 1 à 3, **caractérisé en ce qu'**il comporte en outre une interface de communication (42) pour transférer les données issues de différents indicateurs RFID vers un organe d'administration commun (46) au travers d'un réseau de communication (44).

5. Conteneur comportant une pluralité de produits munis chacun d'un indicateur RFID (10), **caractérisé en ce qu'**il comporte un dispositif de lecture/interrogation RFID selon l'une quelconque des revendications 1 à 4.

6. Conteneur selon la revendication 4, **caractérisé en ce que** ledit produit est une denrée alimentaire périssable.

7. Conteneur selon la revendication 4, **caractérisé en ce que** ledit produit est un médicament.

8. Conteneur selon la revendication 4, **caractérisé en ce que** ledit produit est une substance chimique susceptible de contamination.
